# EUROPEAN PATENT SPECIFICATION

(11) **EP 1 778 020 B1**
(45) Date of publication and mention of the grant of the patent: **21.03.2012**
(21) Application number: 05788669.9
(22) Date of filing: 11.08.2005
(51) Int. Cl.: A23G 3/52, A23G 3/50, A23G 3/00, A23G 3/54

(54) **DUAL TEXTURED SWIRLED CONFECTIONS**
ZWEIFACH STRUKTIERTE, VERWIRBELTE SÜSSWAREN
FRIANDISES A STRUCTURE SPIRALEE A DOUBLE TEXTURE

(30) Priority: 12.08.2004 US 916798
(43) Date of publication of application: 02.05.2007
(73) Proprietor: WM. WRIGLEY JR. COMPANY, Chicago, Illinois 60611-4287 (US)
(72) Inventor: COTTEN, Gerald, B., Sparta, NJ 07871 (US); YUSUF, Christianita, Fanwood, NJ 07023 (US)
(74) Representative: Campbell, Neil Boyd
(86) International application number: PCT/US2005/028494
(87) International publication number: WO 2006/020746

(56) References cited:
- EP-A- 0 936 872
- US-A- 5 019 404
- US-A1- 2004 131 743
- US-A1- 2004 142 092
- US-B1- 6 251 452
- US-B1- 6 309 686

## Description

### FIELD OF THE INVENTION

This invention relates to dual textured swirled confections such as jelly candy or gummy candy, and fruit snacks and methods for the production thereof.

### BACKGROUND OF THE INVENTION

Dual textured confections such as gummy or jelly candy, or fruit snacks have been produced with liquid or jelly-like centers and a soft or chewy shell to provide a high degree of textural dichotomy upon initial consumption. In the mass production of such liquid or jelly-like center filled confections using starch deposition equipment and methods a liquid or jelly-like filled product is formed, shaped, and is cured within a cavity of a starch mold. The enrobed center liquid or jelly-like filling generally remains in the same vertical orientation within the cavity for periods of about 18 to 48 hours while the initially liquid shell component gells or sets. If a jelly-like center is employed, the initially liquid center gells or sets in the cavity during this period to obtain a jelly-like center. If the shell component fed to the starch deposition apparatus or mogul is too viscous or gells or sets prematurely within the concentric deposition nozzle, undesirable clogging of the equipment occurs. Accordingly, to avoid clogging problems, both the shell component and the liquid or jelly-like filling component are liquids upon contact within the deposition nozzle.

However, in producing a liquid or jelly-like center filled confection using both a liquid shell component and a liquid filling component, the liquid center tends to sink or float or disperse within the liquid shell component before the shell component gells or sets within the starch mold cavity. Sinking or floating or dispersion of the liquid center occurs due to even very slight differences in specific gravities of the two components and the prolonged period of time needed for gelling or setting and curing in the same orientation within the starch mold cavity. The problems presented by excessive dispersion and vertical displacement of the liquid center are exacerbated at increasing levels of liquid filling.

Excessive vertical displacement of the liquid or jelly-like filling from a centrally deposited location results in a bottom or top portion of the shell being thin and subject to breakage. Product pieces having vertically off-centered liquid or jelly-like fillings are more prone to leakage. Vertically off-centered products tend to result in "leakers" or product in which the center or filler component leaks out of the shell or is exposed due to weakness or thin spots in the shell.

Excessively thin top and bottom walls resulting from off-centered fillers may also limit the shapes into which the product can be molded, and may also limit the amount of filling because during deposition and molding, the generally cylindrical shape of the shell may be substantially changed. The change in shell shape for enrobing of the filler, and the change in shape to fill a mold cavity may further thin the shell walls.

The thinning problem may be further exacerbated when depositing into a mold cavity having a disproportionally longer vertical dimension or greater height, than horizontal dimension, or width or vice versa (i.e., tall and slender or short and wide). For a given piece weight, when depositing into a cavity of these proportions there is less leeway for increasing the shell flow rate so as to create thicker shell side, top, or bottom walls because the surface area of the piece (both shell and center) is much greater. To obtain thicker walls it may be necessary to substantially reduce the amount of filler, thereby detracting from the sensation of a different texture or liquid center.

The leakage problem in the production of liquid or fluid filled confections creates a sticky product and detracts from the liquid center sensation. The leakage may occur during material handling processes inherent in the manufacture of gummy or jelly sweets or fruit snacks. For example, leakage may occur after molding during oiling, polishing, and packaging operations as well as during transport and long term shelf storage in bags or pouches.

U.S. Patent No. 5,626,896 to Moore et al discloses that filling thin liquid into jelly candy has not been well demonstrated by center shell depositing using a depositing nozzle that has a concentric design due to excessive leaks. Leaks are more likely to develop with jelly candy than with other types of candy, it is disclosed, because the density of sugary liquids, causes them to sink through hot jelly to the bottom of the mold. In the Moore et al method for making liquid-centered jelly candies by deposition in a starch mold, jelly candy is deposited to a level that half fills the mold. A small hard candy pellet is made from sugar, color, flavor, and a cidulent. The hard candy pellet is centered on the jelly candy in each of the half full molds. A second deposit of warm jelly candy is filled over the pellets completing the candy pieces. The candy is cured at about 54.4°C to about 60° (130°F to about 140°F) for about 24-48 hours. During this time moisture from the jelly candy migrates to and liquefies each candy pellet forming the liquid-centered jelly candy. The completed candy pieces are cured in the molds at about 54.4°C to about 60° (130°F to about 140°F) for about 24-48 hours. During the curing process, the moisture from the jelly migrates into and liquefies the sugar paste forming a liquid-centered jelly candy. Moore et al teaches away from contacting of a liquid shell component and a liquid filling component in a concentric nozzle in the continuous production of liquid center filled confections using a mogul or co-deposition equipment.

U.S. Patent Nos. 4,847,098 and 4,853,236, European Patent Publication Nos. 333,510 A2, and 333,510 B1, and Japanese Patent Publication No. 2009346 published Jan. 12, 1990 each to Langler disclose the production of dual textured products using a concentric nozzle with a starchless molding depositor. A shell material having a temperature of about 101.7°C to 104.4° (215°F to about 220°F) 215°F to about 220°F is fed to the starchless molding depositor which is equipped to deposit the center filling. The center is introduced at ambient temperature from a separate unheated hopper. A nozzle assembly brings the center and shell material together to the concentric nozzle where they are simultaneously deposited on a coated "U" board where they are allowed to cool to ambient temperature. The dual textured food products may be fruit snack pieces comprising a soft, supportive, fruit-containing shell portion and a second, more fluid, variably textured core portion. The shell portion can comprise a dehydrated fruit puree composition. In the products of U.S. Patent No. 4,847,098 the core portion can comprise w/o emulsions characterized by low fat levels and defined gelled phases. In the products of U.S. Patent No. 4,853,236 the core portion can comprise an o/w emulsion to create a hydrophobic, liquid fat barrier between the portions. The filling portion, it is disclosed, is perceived as being fluid upon consumption even though at rest the portion may be dimensionally stable, and is believed to be a thixotropic gel. The emulsified fillings of Langler may thus not provide a rush or gush of filling upon initial consumption as would a non-emulsified, non-gelling liquid filling. Moreover, use of an emulsion as a center filling requires additional method steps and equipment for forming each phase of the emulsion and for emulsifying the two phases. In addition, an emulsifier is required to form the emulsion which may result in off-flavors or the use of non-natural ingredients.

U.S. Patent Nos. 5,146,844 and 5,208,059 each to Dubowik et al disclose that shaped, dual textured products of U.S. Patent Nos. 4,847,098 and 4,853,236 to Langler make it difficult to develop apparatus for fabricating such pieces on an industrial scale. In the apparatus and method of Dubowik et al a cavity formed in and defined by abutting inner surfaces of first and second plates is moved along a circuitous path. The circuitous path has a first portion where the first and second plates are abutting together and where the cavity is filled with food material. In the second portion of the path the first and second plates are spaced from each other allowing the removal of the hardened food piece from the cavity. First food material is initially extruded to fill the bottom of a cavity, then the first food material is coextruded with and encircles a second food material, and finally the first food material is extruded to fill the top of the cavity. The first food material is provided to a food injection manifold heated to a temperature in the order of 66°C to 82° (150°F to 180°F) whereas the second food material is provided to the food injection manifold at a temperature range in the order of 50°F (10°C) to room temperature. In the methods and apparatus of Dubowik et al, moguls or starch deposition equipment where the product remains in the same vertical orientation in a mold cavity for an extended period of time for gelling or setting is not employed.

U.S. Patent No. 6,528,102 to Coyle et al discloses processes for the co-deposition of a two component fruit snack confection including a fruit snack material jacket and a distinct center filling. In at least one embodiment, the center filling is jam like and is jelled in part by the action of pectin in the presence of food grade acid. A liquid filling may contain sweetener, corn syrup, sorbitol, water, acid, natural and artificial flavoring and other minor ingredients. The process utilized incorporates mass flow meters to monitor the specific gravities of the jacket and center filling to keep the specific gravities of the center material and the jacket substantially the same in the creation of the multi-component fruit snack. Controlling the specific gravities of the center and the jacket materials so that they are about the same, it is disclosed, reduces the tendency of the filling to migrate upwards or downwards in the confection. For a 2% fill of center relative to the jacket material, up to a 3% difference between the specific gravities was found to be tolerable. For an 18% center fill, a specific gravity difference of only about 0.5% was found tolerable to consistently produce confections wherein the center material is maintained within the outer jacket. However, the continuous control of specific gravities within such narrow tolerances requires expensive equipment. Additionally, the process for controlling the specific gravities generally requires the modification of amounts and types of ingredients employed thereby varying the composition of the final product, and may sacrifice textural and flavor attributes, impair microbial stability, or require non-natural ingredients. For example increasing the water content of a corn syrup-based liquid filling component to reduce its specific gravity may adversely increase the water activity. The increase in water activity may lead to undesirable moisture migration or other ingredient migration between the filling and shell materials or to microbial instability.

However, desirable textural attributes of a confection may be controlled by varying the specific gravity of the confection through aeration. For example, U.S. Patent No. 4,601,907 to Knebl et al discloses a chewy confection having an outer casing comprising chewing gum base and a sweetener, and a center filling which is an aerated plastic blend. The aeration of the center filling, it is disclosed, assists in imparting to the center filling a chewy consistency approximating that of the outer chewing gum casing.

U.S. Patent No. 4,925,380 to Durst discloses apparatus for manufacturing a multicolored aerated confection product, such as a marshmallow or nougat product, utilizing individually adjustable multi-orifice extrusion systems.

U.S. Patent No. 6,495,179, U.S. Patent Publication No. 2003/0091700 A1, and International Patent Publication No. WO 00/64271 each to Zietlow et al disclose aerated confections in the form of pieces having a body color and a body exterior surface where at least a portion has been modified to provide an appearance disparate to the body. At least a portion of the external surface has a distinguishing feature differing from the body in color, texture or structure. Multicolored marshmallows, it is disclosed, are conventionally made by dividing an aerated foam into a plurality of sub-streams, to admix a desired colorant into each sub-stream, and then extrude these colored sub-streams in substantially equal portions into a single rope or multiplicity of such ropes. In the Zietlow process a mass of aerated confection pieces having at least one colored portion and having an external surface at least a portion of which is sticky; have applied thereto particles of a coating at least a fraction of which have a second color to adhere the particles to the sticky portion of the surface. The coated aerated confection pieces are formed into finished non-sticky coated pieces.

U.S. Patent Publication No. 2002/0192345 A1 and International Patent Publication No. WO 02/071872 A2 each to Kepplinger et al disclose forming an aerated food component from a mixture of sweeteners, a fruit concentrate, an ionic hydrocolloid, a calcium source, an edible acid, a cation source, and a whipping protein. The aerated food component can be extruded, cut into pieces and dried to form a low moisture aerated cereal additive that remains crisp in a liquid. The formulation also permits high levels of fruit to be incorporated into the aerated food component.

European Patent Publication No. EPO 0322952 B1 discloses an aerated confection comprising ice confection or chilled mousse-like material and an aerated fat-based glaze material. The glaze material may be a slab or a bar arranged as a core in the confection, or as a plug or relatively big lump in the body of the confection.

In addition to manifesting textural differences with a liquid center, other compositions may be employed. U.S. Patent Publication No. 2002/0102333 A1 to Klug et al discloses production of a dual textured confectionery product where a liquefied confectionery medium, such as chocolate, is first poured into molds where it is then solidified by a cooling process, and thus molded. A lower mold in the shape of the product is formed with at least one, and preferably a plurality, of molds sized and adapted to accept center inclusions. The molds are preferably convex and the center inclusion rests therein. A mating upper mold adapted for nesting attachment to the lower mold is also provided to produce the confection. The edible confectionery product has at least two parts. The first part is a base unit formed of a first confectionery and having a top, a bottom, and between five to twelve sides when viewed from above. The second part is a center inclusion formed of a second confectionery. The center inclusion is partially embedded in the base unit and extends above the top of the base unit. The center inclusion is set in, as viewed from the top, from any side of the base unit. The first confectionery has a different composition and preferably has a different texture than the second confectionery. In one embodiment, a plurality of base units are shearably joined.
US Patent Publication No. 2002/0058102 A1 and International Patent Publication No. WO 03/043437 A1 each to Makela et al disclose molding festooned, edible laminated structures that have at least one first fluid material of a sticky or flowable mass interleaved between thin layers of a second fluid material, wherein the first fluid material forms a pattern visible through the second fluid material, which has a visually translucent thickness. The laminate typically has first and second materials having different textures. For example, the second fluid material is relatively harder and the first fluid material is relatively softer.
US Patent No. 6,623,784 and 6,616,963 each to Zerby et al discloses molding edible laminated structures that have at least one first fluid material of a sticky or flowable mass interleaved between thin layers of a second fluid material wherein neither of the first fluid material nor the second fluid material is a hard candy mass. The laminate typically has first and second materials having different textures. For example, the second fluid material is relatively harder and the first fluid material is relatively softer.
US Patent No. 6,485,771 to Somerville et al discloses that the rheological properties of a particulated get are such that it may be filled into a suitable container with one or more other particulated gels in such a way that the particulated gels substantially do not mix, giving rise to a range of edible compositions of novel texture and/or appearance. The edible composition has a first part including a first particulated gel and at least one other part including a second particulated gel, the first part being substantially unmixed with the other part or parts. An edible composition may be rotated during filling to obtain a product having a swirled or marbled appearance. The particulated gel is formed using high shear at a temperature below the gelling point of the gel.
US-A-2004/0131743 discloses an aerated food product comprising a first quickly dissolving portion comprising 65 to 98% of a saccharide component, 0.5 to 30% of a structuring agent and 0.5 to 1% of a non-protein whipping agent.
US-B-6,309,686 discloses a process for making an aerated product comprising preparing a slurry comprising water, carbohydrate ingredient and a structuring ingredient, dividing the slurry into at least two portions, admixing a colorant into one portion and aerating that portion and coextruding the portions together to form a rope.
US-B-6,251,452 discloses a method for preparing a food product in which two masses having different colours are combined to form a complexly patterned food mass having an initial cross-sectional area and reducing the cross-sectional area using a reducing passageway.
US-A-2004/0142092 discloses a marshmallow food product infused with a flavour, optionally in combination with a second flavoured food product.
US-A-5,019,404 discloses a method for producing a multicoloured, aerated confection product in which a confection blend is divided into a plurality of aerated confection streams, a colouring agent is introduced into at least one of the streams and the streams are combined to form a combined product in an extruder.
EP-A-0936872 discloses a candy-toy comprising a plurality of disk elements of a fruit gum or marshmallow mass.
The present invention provides dual textured confections such as a gummy candy, jelly candy, and fruit snacks where the textures are uniquely melded together to build upon each other and provide an unexpectedly mousse-like eating quality rather than a center-filled product having a marshmallow texture with a jelly center mouthfeel. The product not only has a unique texture much like a desert mousse, but also has remarkable visual attributes in which both translucent and opaque attributes combine to provide a toy three-dimensional marble-like appearance.

The uniquely dual textured products of the present invention may be produced using a Mogul or starch co-deposition apparatus using low viscosity, liquid components to avoid candy stringing. The two components may have substantially different specific gravities upon contact and upon gelling. The problems associated with substantial decentering of a liquid center filling which creates weak top and bottom shell walls does not occur during extended gelling, setting, and drying times in a single vertical orientation in a starch mold cavity. The specific gravities of the liquid components upon contact and in their fully gelled state may be substantially different at high content levels for both components. Expensive equipment for precise maintenance of the specific gravity within close tolerance is not needed to avoid substantial sinking or floating as may be the case where a liquid center filling is employed to achieve substantially different textures. Use of continuous gelled components having different textures rather than the use of a gelled shell and a liquid filling avoids shell breakage and filling leakage problems.

The dual textured confections of the present invention are non-sticky at room temperature, and are durable during material handling processes employed after deposition and molding such as oiling, polishing, and packaging. The products exhibit long term shelf life in bags or pouches without problems of leaking or bleed-out of a liquid filling, without the need for using emulsified w/o or o/w compositions, or emulsifiers which may adverse affect flavor, and without requiring non-natural ingredients.

### SUMMARY OF THE INVENTION

Dual textured confections such as gummy candies, jelly candies, and fruit snacks, may be produced using Mogul or starch deposition techniques and equipment by swirling together gellable liquid components having substantially different specific gravities to obtain a unique, non-particulated, mousse-like textured product with a swirled or marbleized appearance. The dual textured confections include a first component which is gelled and is substantially aerated and a second component which is gelled and preferably non-aerated. The gelled first and second components have substantially different specific gravities and are swirled together so that both components are distinct, throughout the confection, and present at the surface of the confection. The surface of the product is non-sticky and each of the two swirled components are non-particulated, continuous gels which meld together to provide a unique, smooth, mousse-like mouthfeel rather than a marshmallow-jelly like or jam-like mouthfeel.

The ratio of the specific gravity of the first component to the specific gravity of the second component is from 0.3:1 to 0.9:1, preferably from about 0.4:1 to about 0.75:1. The second component may be transparent or translucent and the first component may be opaque to provide a toy three-dimensional marble-like appearance.

The first and second components may each include one or more gelling agents and a gel-setting agent. In preferred embodiments, the at least one gelling agent of the second component may set faster than the at least one gelling agent of the first component so as to prevent substantial bleeding of the two components into each other.

The first and second components may be produced using the same base slurry, but different gelling agents, colorants, or flavorants, and different amounts of aeration. In other embodiments the base slurry for each component may be different from each other. The amount of the first component may be from about 30% by weight to about 60% by weight based upon the total weight of the first and second components.

Swirling of the two components together may be achieved by feeding the first component and second components through alternating apertures into a starch deposition nozzle. The swirled together components may be co-deposited into a starch mold cavity forming into a desired shape and curing of the pieces. The first and second components are distinct but distributed through the mold cavity and each component is also in direct contact with an inside surface of the mold cavity to take the shape of the mold cavity.

### DETAILED DESCRIPTION OF THE INVENTION

The present invention provides dual textured confections such as gummy or jelly candies or fruit snacks, where a substantial difference in specific gravities and swirling of two gelled components are employed to obtain both a unique dual texture with a mousse-like mouthfeel, and a marbleized appearance. The substantial difference in specific gravities to obtain the dual texture is achieved by substantially aerating one of the components. The second component is preferably non-aerated, but in embodiments of the invention may be aerated to a substantially lesser degree than the first component. The textures of the substantially aerated component and the non-aerated or less aerated component unexpectedly meld together to provide a pleasant, smooth, non-particulated, non-jam-like mouthfeel rather than a distinct, textural dichotomy of a marshmallow and jelly combination which is obtained with a center filled product having the same components.

The first and second components are swirled together so that both components are distinct from each other, with no or substantially no bleeding of one component into another. In embodiments of the invention, use of at least one gelling agent in the second component which sets faster than the at least one gelling agent of the first component helps to prevent substantial bleeding of the two components into each other. The distinct portions of the two components are present throughout the interior of the confection, and are present at the surface of the confection in a swirled or marbleized pattern, such as in a three-dimensional toy marble. Even though both gelled components are present at the surface of the confection and possess substantially different specific gravities, the surface is non-sticky and the product retains its shape and marbleized appearance over extended periods of time.

The dual textured swirled confections of the present invention may be made batchwise or continuously to obtain continuous, non-particulated gels using a Mogul or starch deposition equipment without candy tailing, and without the decentering, shell breakage and filling leakage problems encountered with liquid center filled confections. Each of the first component and second component gels may be continuous, non-particulated gels which may be obtained without subjecting the gels to high shear, particulating conditions. The swirling of the two components may be accomplished by co-deposition into a stationary starch mold cavity without using a rotating mixing or stirring device.

Upon contact in the starch co-deposition nozzle, the ratio of the specific gravity of the first component, or highly aerated component to the specific gravity of the second component or non-aerated lower aerated component is from 0.3:1 to 0.9:1, preferably from about 0.4:1 to about 0.75:1. For example, the specific gravity of the first component may be less than about 0.9 g/ml, preferably from about 0.5 g/ml to about 0.8 g/ml, and the specific gravity of the second component may be from about 1.1 g/ml to about 1.5 g/ml, preferably from about 1.2 g/ml to about 1.4 g/ml. The specific gravities of each of the first and second components does not substantially change from the time they come in contact in the co-deposition nozzle. Thus, the specific gravity of the first or aerated component upon contact with the second component, upon deposition into the starch mold, and in the final dual textured swirled confection remains substantially the same. Similarly, the specific gravity of the second or non-aerated component upon contact with the first component, upon deposition into the starch mold, and in the final dual textured swirled confection remains substantially the same.

Aeration to reduce the specific gravity tends to result in an opaque component whereas a transparent or translucent component may be obtained when aeration is not employed. In preferred embodiments, the first component is substantially aerated and opaque and the second component is non-aerated and transparent or translucent so that the swirled pattern of the first component is visible through the swirled pattern of the second component to provide a three-dimensional marbleized appearance.

The dual textured swirled confections may be produced batch-wise or continuously using commercially available Mogul or starch depositor equipment such as starch depositors manufactured by NID Pty. Ltd., Winkler Dunnebier GmbH, Werner Makat GmbH, American Chocolate Mould Co., and APV. The commercially available Moguls or starch depositors for dispensing the first or aerated component and the second or non-aerated component into a mold generally include one or more co-extrusion nozzles or die blocks secured to a die head or manifold. In center fill manifold and nozzle combinations used for starch depositing, a center product or filler component runs down an inner tube down the center or middle of the manifold nozzle to near the extraction point of the nozzle. At this point it is surrounded by the shell component which has been flowing down the annular space in the nozzle between the nozzle outer wall and the inner tube. However, in making the swirled products of the present invention, a conventional swirling or striping nozzle arrangement may be employed where the different components are initially contacted in a side-by-side type of arrangement rather than in a concentric arrangement.

For example, a swirling or striping nozzle arrangement may include a plurality of apertures or bores within a manifold plate or nozzle plate which all feed into a starch deposition nozzle having a single bore or passageway. The single bore or passageway may taper from its upstream end to its downstream or exit end. The apertures or bores in the manifold or nozzle plate may be arranged in a circle or other pattern near the inner wall of the nozzle to provide swirling. The apertures or bores in the manifold or nozzle plate may be the same size or differently sized. The number of different sizes may be two or more, three or more, four or more, etc. up to the total number of apertures or bores in the manifold or nozzle plate. In embodiments of the invention the total number of apertures or bores may be at least two, for example 6 to 14. For example, every other aperture or bore may each have the same diameter, but adjacent apertures or bores may have different diameters, and the total number of apertures or bores may be 12. In other embodiments, adjacent apertures or bores may increase in size around the inner periphery of the nozzle.

The first or aerated component may be fed through a plurality of first component apertures into the starch deposition nozzle, and the second component, such as non-aerated component, may be fed through a plurality of second component apertures into the starch deposition nozzle. The first and second apertures may be arranged in alternating positions in a circular pattern so that the first and second components are swirled together within the nozzle. The two components remain distinct from each other and do not blend or bleed into each other to form a single substantially homogeneous mass.

Examples of aperture arrangements in a nozzle manifold which may be employed in the present invention for producing swirled patterns are shown and described in U.S. Patent Nos. 6,099,880 and 6,413,564 each to Klacik et al.

The swirling of the two components within the co-deposition nozzle may be controlled or adjusted by changing their relative flow rates and flow directions using known starch deposition equipment and methods. Generally, the Mogul or starch deposition pistons may be employed to control the amount or type of flow of the first or aerated component and the second or non-aerated component so as to control the degree of swirling together as they pass through the nozzle and are deposited into the cavity of a mold. The pistons may be used to control the relative amounts of each of the two components in each dual textured piece. The first or aerated component may be supplied to the first component apertures and nozzle from a temperature controlled or jacketed first component hopper. The first component apertures may also be in flow communication with a first component piston which moves between a first and a second position to deposit the first component. The second component may be supplied to the second component apertures and nozzle from a temperature controlled or jacketed second component hopper. The second component apertures may be in flow communication with a second component piston, which moves between a first and a second position to deposit the second component.

The first and second components are co-deposited in a mold having mold cavities or impressions. The cavities or impressions are preferably created in a starch-based material which is to be filled with the co-deposit of first and second swirled components. In the production of gummy or jelly candies, or fruit snacks a starch mold is generally preferred due to its flexibility in enabling changing shapes easily and removing additional moisture from the product in the curing room through a wicking type action. Semi-rigid molds or flexible molds such as silicone rubber molds, or rigid molds such as molds cast of metal, as used in hard candy production may also be employed for varying confections.

The pistons may be controlled in conventional manner to swirl the first and second components together by pulsating or controlling the relative flow rates of the shell and filler components. The pistons maybe employed to stop, retract or reverse, decrease, or increase flow of the components emanating from the first and second component apertures and common nozzle bore as they are deposited into the mold impressions or cavities.

For example, the depositing nozzle may be positioned close to the mold cavity. By controlling the pistons, the first or aerated component and the second or non-aerated component may flow into the nozzle at different rates, swirl together in the nozzle and as they flow into the cavity. The first and second components may then spread laterally within the cavity to take the shape of the cavity in the starch material while one or both of the components are still being injected or deposited into the cavity. Injection of one component, such as the first or aerated component, may then be ceased and the component's piston may be reversed to reverse the flow or suck back the component. However, the other component, such as the second or non-aerated component may be continued to be deposited and causes the deposited, swirled components to begin to separate from the aerated component still within the inner nozzle. The component connecting the deposited components to the component still within the inner nozzle narrows first to a neck and then to a finer connection. The depositing of both the first and second components may be stopped, and the starch tray or mold and the starch cavity or impression may be moved away from the deposition nozzle. A separated, swirled or marbleized dual textured confection piece is obtained within the mold cavity where portions of each of the swirled first and second components are in contact with the mold cavity forming surface.

In embodiments of the invention, the amount of the first component or aerated component may be at least about 10% by weight, preferably at least about 15% by weight, most preferably from about 30% by weight to about 60% by weight, based upon the total weight of the first or aerated component and the second or non-aerated or lower aerated component in the dual textured swirled confection.

The amount of bleeding or migration of one component into the other may be substantially limited or avoided so as to obtain distinct regions or portions of each component by rapidly gelling the components. Rapid gelling of one or both of the components reduces its fluidity, increases its viscosity and substantially avoids mixing or blending of components together or migration of one component into another. In preferred embodiments the second or non- or lower-aerated component is gelled or sets up more rapidly than the first or aerated component so as to prevent substantial bleeding of the two components into each other. Rapidly setting the clear, transparent or translucent high specific gravity component helps to prevent the bleeding of the clear component into the lower specific gravity, aerated, opaque component. In preferred embodiments, the higher specific gravity component or the second component may begin to gel or set or undergo a substantial increase in viscosity within about two minutes, preferably within about one minute, for example within about 10 seconds of being formulated. The rate of gelling may be increased by using faster setting gelling agents, higher amounts of gel setting agents or lower pH's, and by cooling the components. For example, for a given amount of gelling agent, carrageenan generally sets quicker than pectin, and pectin generally sets quicker than gelatin. Thus, pectin may be employed in the non-aerated component and a combination of pectin and gelatin may be employed in the aerated component so that the non-aerated component sets faster than the aerated component.

Rapid gelation or setting of one or both of the components also helps to prevent undesirable, substantial vertical travel of both components, or sinking of the higher specific gravity component and floating of the lower specific gravity component to the point where laminated layers of the components rather than swirling or marbleization is obtained in the final product. Thus, in preferred embodiments of the present invention, the distinct portions of each component may be at least substantially uniformly swirled, distributed or present throughout the confection and on its surface or randomly distributed rather than being striated or laminated, or highly concentrated at the top or bottom of the confection.

In accordance with embodiments of the present invention, the temperature of the first and second components upon contact with each other in the co-deposition nozzle should be as low as possible for more rapid gelling or setting and prevention of bleeding of the non-aerated or higher specific gravity second component into the aerated, lower specific gravity first component. However, the component temperatures should not be so low that the components gel or set prematurely in the Mogul manifold or co-deposition nozzle or in upstream material mixing and handling equipment. The viscosity of the shell component should not be permitted to increase to a point where clogging of the coextruder or Mogul nozzle or manifold occurs or high back pressures are produced in the manifold or upstream material handling equipment In embodiments of the invention, the contact temperature of the component may be slightly higher than the gelling or setting temperature of the component or gelling agent. The gelling or setting temperature of the component or gelling agent may be readily determined experimentally by measuring the temperature of the component as it is cooled and observing the temperature at which its viscosity suddenly or rapidly increases or a jam-like consistency is obtained. In embodiments of the invention, the contact temperature may be less than about -3.9°C (about 25°F), preferably less than about -9.4°C (about 15°F), for example from about -17.2°C to about -12.2°C (about 1°F to about 10°F), more preferably from about -16.7°C to about -15°C (about 2°F to about 5°F) higher than the gelling or setting temperature. The gelling or setting temperature will vary depending upon the type and amount of the gelling agent employed. In embodiments of the present invention, the temperature of the first component and the temperature of the second component upon contact in the codeposition nozzle may range from about 71.1°C to about 104.4°C (about 160°F to about 220°F), preferably from about 82.2°C to about 98.9°C (about 180°F to about 210°F), more preferably from about 85°C to about 96.1°C (about 185°F to about 205°F), for example from about 87.8°C to about 93.3°C (about 190°F to about 200°F).

Cooling to achieve the desired liquid first component and liquid second component contact temperature may be accomplished by cooling each component prior to introduction into the Mogul or starch co-depositor under ambient temperature conditions and/or with a conventional heat exchanger or cooling unit.

In embodiments of the invention, the starch of the starch mold may be cooled to a temperature of less than about 23.9°C (about 75°F) prior to depositing of the components into the mold cavity to assist in reducing gelling or setting times of the components within the mold.

The viscosities of the liquid, aerated first component and the liquid, non-aerated or lower aerated second component at the time of contact within the co-deposition nozzle and upon deposition into the starch mold cavity may be substantially the same or different from each other. Upon deposition into the starch mold cavity the viscosity of each component should be sufficiently low so as to avoid substantial candy tailing.

In embodiments of the present invention the viscosity of the first (aerated or low specific gravity) component may generally be greater than the viscosity of the second (non-aerated or lesser-aerated or higher specific gravity) component at the time of their contact in the co-deposition nozzle and upon co-deposition within the starch mold cavity. The aeration of a component may tend to increase its viscosity or resistance to flow. In embodiments of the invention, the ratio of the viscosity of the first or aerated component to the viscosity of the second or non-aerated component may range up to about 5:1, for example up to about 1.2:1.

Any conventional ingredients or materials for gummy candies, jelly candies, and fruit snacks, may be used for making the dual textured swirled confections of the present invention. The dual textured swirled confections may be fat-free or sugar-free. For example, the first or aerated component and the second or non-aerated or low-aerated component may include one or more of fruit juices, fruit concentrates, and fruit purees, one or more sweeteners such as high fructose corn syrup, corn syrup, sugars such as sucrose and dextrose, maltitol syrup, corn syrup solids, maltodextrins, and sorbitol, one or more synthetic, artificial or non-nutritive sweeteners, one or more edible acids such as citric acid, malic acid, and ascorbic acid, one or more edible buffering agents such as sodium citrate or potassium citrate, coloring, flavoring, a dairy component, such as cream or milk, preservatives, and nutrients such as vitamins and minerals. Each of the first and second gellable, liquid components may contain one or more gelling agents such as pectin, gelatin, carrageenan, agar, modified food starches, such as modified corn starch, and other gums and hydrocolloids. Pectin and gelatin are preferred gelling agents for use in the aerated or lower specific gravity first component. The gelatin bloom may range from about 200 to about 300. Pectin alone is the preferred gelling agent for use in the non-aerated or low level aeration, higher specific gravity second component. A high methoxypectin which sets up in the presence of acid is most preferred as a gelling agent for use in both the first and second components.

In embodiments of the present invention, each of the gellable liquid first and second components or slurries which are swirled together in the Mogul or co-deposition nozzle may each contain from 0% by weight to about 80% by weight, generally from about 30% by weight to about 60% by weight, preferably from about 40% by weight to about 55% by weight of one or more corn syrups, from about 0% by weight to about 45% by weight, preferably from about 15% by weight to about 40% by weight, more preferably from about 20% by weight to about 35% by weight sucrose, from about 0% by weight to about 80% by weight other sweeteners such as dextrose, corn syrup solids, maltitol syrup, sorbitol, and maltodexirin, about 0.01% by weight to about 10% by weight, preferably from about 1% by weight to about 8% by weight, of at least one gelling agent such as pectin, gelatin, carrageenan, agar, modified starch, such as modified corn starch, and other gums and hydrocolloids, from about 0% by weight to about 20% by weight, preferably from about 2% by weight to about 10 % by weight of a fruit component such as at least one fruit puree, fruit juice concentrate, and fruit juice, about 0.01% by weight to about 5% by weight, preferably from about 0.5% by weight to about 2.5% by weight of at least one buffering agent such as sodium citrate, and potassium citrate, from about 0.01% by weight to about 5% by weight, preferably from about 0.5% by weight to about 3% by weight of at least one acidic agent such as citric acid, malic acid, and ascorbic acid, from about 0% by weight to about 5% by weight, preferably from about 0% by weight to about 2% by weight of at least one coloring agent or color, about 0.01% by weight to about 5% by weight, preferably from about 0.1 % by weight to about 2% by weight of a flavoring agent or flavor, about 0% by weight to about 6% by weight of a dairy component such as cream, about 0% by weight to about 5% by weight, preferably from about 0.01% by weight to about 1% by weight of at least one vitamin, such as vitamin C, and effective sweetening amounts of any optional one or more synthetic, artificial or non-nutritive sweeteners, where the percentages are based upon the total weight of the individual component or slurry, and add up to 100% by weight.

The gellable first component and the gellable second component may each be non-emulsified, single phase components and may be formulated to contain only natural ingredients. The buffering agent helps to prevent premature gelling or pre-gelling of the gelling agent of the components prior to contact and swirling of the components in the swirling, co-deposition nozzle. In embodiments which contain a vitamin in a component, use of a buffering agent in the component helps to retard vitamin degradation.

The water activity for each of the first and second components upon contact in the swirling nozzle is preferably less than about 0.7 to assure microbial shelf stability. The water activities of the first and second components are preferably at least substantially equal so as to substantially prevent moisture migration and ingredient migration between the two components.

In addition, the solids contents of the first and second components upon contact in the co-deposition nozzle are preferably at least substantially equal so as to substantially prevent moisture migration and ingredient migration between the two components. In embodiments of the present invention, the solids contents of the first component and the second component may range from about 72% by weight to about 82% by weight, preferably from about 75% by weight to about 80% by weight.

Generally, the first and second components may be produced by admixing water, at least one gelling agent, such as pectin, at least one sugar or sweetening agent, such as sucrose, dextrose and corn syrup, and a buffering agent such as sodium citrate to obtain a substantially homogenous slurry. The resulting slurry maybe cooked to obtain a cooked base slurry. The cooked base slurry may be divided into a first portion for making the first component and a second portion for making the second component. In other embodiments, the cooked base slurry for the first component may be continuously prepared separately from the continuous preparation of the cooked base slurry for the first component. The first portion of the cooked base slurry and the second portion of the cooked base slurry may each be admixed with a gel setting agent, such as citric acid. Different amounts of the gel setting agent may be employed to help provide desired gel setting times for each component. An additional gelling agent, such as gelatin may be admixed with the first portion of the cooked base slurry to slow the gelling or setting rate of the first or aerated component. In addition, the remaining ingredients such as color, flavor, and dairy ingredients may be admixed with the cooked base slurry prior to aeration.

The gellable liquid first component or aerated, low specific gravity component or slurry and the gellable liquid second component or non-aerated or low aeration higher specific gravity second component or slurry may each be produced batchwise or continuously using conventional mixing, weighing, and heat exchange equipment. For example, to produce the first or aerated component or slurry, a gelatin solution, a base slurry, and an optional color solution are prepared and then combined with any additional ingredients such as flavoring ingredients, dairy ingredients, fruit juices, fruit concentrates, fruit purees, organic acids, and vitamins to obtain a depositing first or aerated component or slurry for feeding to the Mogul or starch co-deposition equipment.

The gelatin solution for the first or aerated component or slurry may be prepared by measuring and combining the specified quantities of gelatin and water, preferably hot water to aid in the dissolution rate, heating the admixture up to about 60°C to about 65.6°C (about 140°F to about 150°F) in a boiler, and permitting the gelatin to hydrate for about 30 minutes to obtain a substantially homogeneous gelatin solution.

The optional color solution for the first or aerated component or slurry may be prepared by measuring and combining the specified quantities of color and water, preferably hot water, and mixing the ingredients to fully dissolve the color particles and obtain a substantially homogeneous color solution. The weight percentage of the color ingredient maybe from about 5% by weight to about 15% by weight, based upon the weight of the color solution.

The base slurry may be prepared by dry blending any additional gelling agent such as pectin or carrageenan with the buffering agent and a portion of the sucrose so as to substantially homogeneously disperse the gelling agent with the other solids to decrease the likelihood of clumping when adding the gelling agent to the wet blend ingredients. The amount of the sucrose used to form the dry blend may range, for example, from about 15% by weight to about 30% by weight, based upon the total amount of sucrose employed in the component.

The wet blend for the base slurry may be prepared by measuring and combining the specified quantities of water, corn syrups, the balance of the sucrose, and any additional sweeteners in a steam jacketed, well agitated vessel such as a Breddo Liquiefier. The steam heat is turned on when the ingredients are added and heating is begun to reach a cooking temperature, generally from about 93.3°C to about 148.9°C (about 200°F to about 300°F), depending upon the gelling agent, for example from about 110°C to about 112.8°C (about 230°F to about 235°F) in a batch cooking process when the gelling agent comprises gelatin and pectin. While the slurry of wet blend ingredients is beginning to heat up, the high shear mixer may be turned on and the dry blend may be slowly admixed with the wet blend. When addition of the dry blend is complete, mixing may be continued under high shear, generally for about 3 minutes to about 20 minutes, to obtain a substantially homogeneous mixture. The high shear mixer is preferably only pulsed on occasionally so as to minimize aeration of the batch during cooking. Swept surface agitation may be turned on and the resulting slurry is heated until it reaches about 110°C to about 112.8°C (about 230°F to about 235°F) or as hot as necessary to achieve a desired solids content for the cooked base slurry, preferably about 80% to about 87% by weight solids, for example about 84% by weight solids, as measured with a calibrated refractometer. In other embodiments of the invention, the base slurry may be cooked to a temperature of about 129.4°C to about 137.8°C (about 265°F to about 280°F) using a continuous cooker and then subjected to vacuum flashing to reduce the temperature to about 82.2°C to about 96.1°C (about 18°F to about 205°F).

The cooked base slurry, the gelatin solution, an aqueous acid solution, such as a 50% by weight citric acid solution, and other ingredients such as optional fruit juice, one or more optional dairy components, such as cream, flavor and vitamins are admixed together to obtain a desired solids content for example about 77% by weight solids, and a desired temperature, for example about 87.8°C to about 93.3°C (about 190°F to about 200°F) for the finished first or aerated component or slurry. The admixing of the ingredients may be performed at low speed with a whisk mixer or other aerating equipment during ingredient addition. When all of the ingredients have been combined, mixing may be continued at high speed to aerate the first component admixture until the specific gravity drops to a desired level, such as about 0.5 g/ml to about 0.8 g/ml. The finished first or aerated component or slurry may then be transported or fed to the first component side hopper of the mogul or starch co-depositor for co-deposition with the second component. The mixing and aerating apparatus and the mogul hopper may be heated to a temperature equal to or above the temperature of the finished aerated first component to prevent the product from cooling too much and setting up prematurely before being co-deposited.

To produce the second or non-aerated or higher specific gravity component or slurry, an acid solution, a base slurry, and an optional color solution may be prepared and then combined with any additional ingredients such as flavoring ingredients, fruit juices, fruit concentrates, fruit purees, organic acids, and vitamins to obtain a depositing second component or slurry for feeding to the Mogul or starch co-deposition equipment.

The acid solution, base slurry, and color solution for the second component may each be prepared in the same manner as for the first component. In preferred embodiments, the acid solution, base slurry and color solution for both the first component and the second component are the same.

For preparing the second component, the solids content of a portion of the cooked base slurry used to make the first component may be adjusted by water addition to achieve a desired solids content for the second component's base slurry portion. For example, the cooked base slurry used to make the first component may have a solids content of about 84% by weight which may be reduced by water addition to about an 81% by weight solids content, as measured by a hand refractometer, for use making the second component.

The cooked slurry may then be tempered, for example at a temperature of about 104.4°C (about 220°F). The cooked base slurry, an aqueous acid solution, such as a 50% by weight citric acid solution, the color solution, and other ingredients such as optional fruit juice, flavor and vitamins may be admixed together to obtain a desired solids content, for example about 79% by weight solids, and a desired temperature, for example about 87.8°C to about 93.3°C (about 190°F to about 200°F) for the finished second or non-aerated component or slurry. The specific gravity of the component may be from about 1.1 g/ml to about 1.5 g/ml. The second component may be slightly aerated using aeration equipment as employed with the first component. However, it is preferable to not aerate the second component to achieve a clear, transparent or translucent second component with a texture and appearance substantially different from those of the first component.

The finished second or non-aerated component or slurry may then be transported or fed to the second component side hopper of the mogul or starch co-depositor for co-deposition with the first component. The mixing apparatus, optional aerating apparatus, and the mogul hopper for the second component may be heated to a temperature equal to or above the temperature of the finished second component to prevent the product from cooling too much and setting up prematurely before being co-deposited.

In accordance with embodiments of the present invention for the continuous production of dual textured swirled confections on a mass production basis, a continuous batching system may be employed such as those commercially available from Klockner, Ter Braak, Bosch, Ruffinatti, or APV. This system automatically doses the pre-programmed quantity of ingredients by weight using a weigh kettle and dispenses it into a jacketed use kettle. The common base slurry for the first and second components may be made up in this continuous batching system. The various other solutions, such as the gelatin solution, acid solutions, and color solutions, would be made up in separate kettles. In each case a "Make-up" kettle feeding a "Use" kettle or tank may be employed to provide surge capacity while making up a fresh batch. The "Use" kettle or tempering tank may be maintained at an elevated temperature, such as a temperature of about 71.1°C to about 82.2°C (about 160°F to about 180°F) to prevent flow problems and to reduce heating times in the downstream dissolver and cooker.

A continuous coil cooker, such as a continuous gummy/jelly type coil cooker as available from Klockner, Ter Braak, Bosch, or APV may be used to cook the base slurry or syrup as delivered from the batching system's "use" or tempering tank. The system utilizes a coil type cooker and discharges into an atmospheric flash-off tank followed by a vacuum chamber. For example, the base slurry may be heated in the coil type cooker to a cooking temperature of about 129.4°C to about 137.8°C (about 265°F to about 280°F) and then flashed in the vacuum flash-off tank to a pressure of about 12.7cm (about 5 in). Hg to about 38.1cm (about 15 in.) Hg and a temperature of about 82.2°C to about 112.8°C (about 180°F to about 235°F).

The vacuum cooled cooked base slurry may then be discharged from the coil cooker's vacuum tank and split into two streams: a first stream for the whipped or aerated first component, and a second stream for the second or non-aerated component.

To obtain the first component or whipped or aerated component, the first stream of cooked base slurry may be pumped through a flow meter, a minor ingredient (e.g. gelatin, dairy, color, flavor, and acid) injection station and then to a Mondomix type aerator. The minor ingredients may be injected via in-line injectors and metering pumps. The exit of the aerator may feed directly into a standard side-by-side type Mogul or starch co-deposition equipment with a swirl nozzle, as available from NID, Makat, or Winkler and Dunnebier. Level sensors in the Mogul hopper may directly control the feed rate from the cooker extraction pump through the aerator. A level sensor in the cooker vacuum kettle may directly control the feed rate of the uncooked syrup to the cooker.

To obtain the second component or non-aerated component, the second stream of cooked base slurry may be pumped through a flow meter, a minor ingredient (e.g. juice, color, flavor, and acid) injection station where the minor ingredients may be injected via in-line injectors and metering pumps and pass through static mixing elements and then to the Mogul or starch co-deposition equipment. Level sensors in the Mogul hopper may directly control the feed rate from the cooker extraction pump to the Mogul.

After co-deposition into the cavities of the starch trays, the starch trays with product may be cured, for example for about 22 hours to about 26 hours. After curing of the product, the starch trays containing product may follow the industry standard shake-out procedure in which the starch is separated from the confectionary pieces in a series of de-dusters. Then the product may be oiled and polished in a drum with Certicoat® CL 90P (a mineral oil/carnauba wax blend), a coating composition produced by Mantrose-Haeuser Co., Inc., Westport, CT, or other commonly utilized food grade release agent at an exemplary level of about 0.15% by weight to provide hygroscopic resistance and to minimize the likelihood of products sticking together.

The coated product may then be bagged and packaged in environmentally controlled rooms where the temperature is below about 23.9°C (about 75°F) and the relative humidity is below about 45%.

The first or aerated component or low specific gravity component, and the second or non-aerated component or high specific gravity component may have the same or different flavors and/or colors. The second component may be transparent or translucent so that the first or aerated component is visible through the second component. The first and second components may have substantially different textures when separate from each other, or if produced in a center filled confection, such as soft and chewy, and firm and chewy. However, upon swirling, the textures meld together to provide a smooth, pleasant, mousse-like texture.

Dual textured swirled confections of the present invention are durable during material handling processes employed after deposition and molding such as oiling, polishing, and packaging. The dual textured swirled confections may be produced in a wide variety of shapes, such as spherical or toy marble shaped, fruit shapes, gum drop shapes, jelly bean shapes, animal, fish, or plant shapes, and the like. Mold cavities or impressions which have a maximum depth dimension which is substantially the same as or deeper than its largest width-wise dimension, or visa versa may be employed. The products exhibit long term shelf life in bags or pouches without leaking of components. They are non-sticky, and have a highly desirable marbleized or swirled appearance, especially when one component is translucent or transparent thereby making an opaque aerated component visible in the interior of the confection as well as on its surface.

The following examples, wherein all parts, percentages, and ratios are by weight, all temperatures are in °C (°F), and all pressures are atmospheric pressure unless indicated to the contrary, illustrate the present invention:

### EXAMPLE 1

A dual textured, swirled fruit snack or gummy product may be produced in accordance with the present invention by preparing a gellable, non-aerated slurry and a gellable, aerated slurry having a different specific gravity than the non-aerated slurry. The ingredients, their relative amounts, and the methods of preparation which may be used to produce the non-aerated and aerated slurries for deposition in a Mogul or starch depositor are:

### I. Preparation of the Non-Aerated Slurry

A gellable, non-aerated slurry may be obtained by preparing a 50% by weight citric acid solution, a color solution, and a base slurry, and then combining them with other ingredients to obtain a non-aerated slurry for depositing:

### 1) Preparation of the Citric Acid Solution

The ingredients and their relative amounts which may be used to prepare the 50% by weight citric acid solution are:

**Citric Acid Solution**

| Ingredient | Ingredient Solids (% by wt.) | Batch (% by wt.) | Batch Solids (% by wt.) |
|---|---|---|---|
| Citric Acid | 99.50% | 50.00% | 49.75% |
| Hot Water | 0.00% | 50.00% | 0.00% |
| TOTAL | | 100.00% | 49.75% |

The citric acid and water may be combined and mixed to fully dissolve the citric acid.

### 2) Preparation of the Color Solution

The ingredients and their relative amounts which may be used to prepare the color solution are:

**Color Solution**

| Ingredient | Ingredient Solids (% by wt.) | Batch (% by wt.) | Batch Solids (% by wt.) |
|---|---|---|---|
| Red #40 dye | 100.00% | 10.00% | 10.00% |
| Hot Water | 0.00% | 90.00% | 0.00% |
| TOTAL | | 100.00% | 10.00% |

The color solution may be prepared by admixing the red dye with the hot water to fully dissolve the color particles.

### 3) Preparation of the Base Slurry

The base slurry may be prepared by forming a dry blend and a wet blend and then combining the two blends. The ingredients and their relative amounts which may be used to prepare the base slurry are:

**Base Slurry**

| Ingredients | Batch (% by wt.) | Batch Solids (% by wt.) |
|---|---|---|
| Dry Blend: | | |
| Pectin | 1.09% | 0.96% |
| Sugar | 5.43% | 5.41% |
| Sodium Citrate buffering agent | 0.16% | 0.16% |
| Wet Blend: | | |
| Water | 16.30% | 0.00% |
| 62 DE Corn Syrup | 44.12% | 36.09% |
| Sugar | 23.98% | 23.86% |
| Dextrose | 8.91% | 8.82% |
| TOTAL | 100.00% | 75.30% |

A dry mix or pre-blend of the pectin, a portion of the sugar and sodium citrate buffering agent may be prepared so as to disperse the pectin amongst the other solids so as to decrease the likelihood of clumping when adding to the slurry (wet blend).

The water, 62 DE corn syrup, dextrose, and remaining portion of the sugar may be admixed in a steam jacketed, well agitated vessel such as a Breddo Liquefier. The steam heat may be turned on when the ingredient addition is completed and the heating may be continued to obtain a temperature of about 111.1°C (about 232°F).

While the slurry is beginning to heat up, a high shear mixer may be turned on and the dry blend may be slowly added. When the dry mix addition is complete, mixing may be continued under high shear for about 15 minutes. The high shear mixer may pulsed on occasionally during this period so as to minimize aeration of the batch during cooking. The swept surface agitation may be turned on and heating or cooking may be continued so that the resulting slurry is heated up to about 111.1°C (232°F) or as hot as necessary to achieve about 84% solids by weight as measured using a calibrated refractometer.

### 4) Combining the Ingredients For the Non-Aerated Slurry

The cooked base slurry and remaining ingredients may then be combined to obtain the gellable, non-aerated slurry for deposition. The ingredients and their relative amounts which may be used to obtain the non-aerated slurry are:

**Non-Aerated Slurry**

| Ingredient | Batch (% by wt.) | Batch Solids (% by wt.) |
|---|---|---|
| Cooked base slurry, 81% by wt. Solids | 90.35% | 73.18% |
| White Grape Juice | 7.00% | 4.76% |
| Strawberry flavor | 0.15% | 0.15% |
| 50% Citric acid solution | 2.20% | 1.10% |
| 10% Red solution | 0.30% | 0.03% |
| TOTAL | 100.00% | 79.22% |

Water may be added to the cooked base slurry to achieve an 81 % solids reading as measured using a hand refractometer. The cooked slurry may be tempered to 104.4°C (220°F). The grape juice, citric acid solution, red solution, and the flavor may be admixed to obtain a substantially homogeneous finished slurry with a final solids content of about 79% by weight and a temperature of about 90.6°C (195°F).

The finished non-aerated slurry may be placed in a second component hopper of an NID Printer Depositor or Mogul for deposition.

The non-aerated slurry may have a specific gravity of about 1.3 g/ml at about 90.6°C (195°F) and about 79% by weight solids.

### II. Preparation of the Aerated Slurry

A gellable, aerated slurry may be obtained by preparing a gelatin solution, a citric acid solution, a color solution, and a base slurry, and then combining them with other ingredients to obtain an aerated slurry for depositing:

### 1) Preparation of Gelatin Solution

The ingredients and their relative amounts which may be used to prepare the gelatin solution are:

**Gelatin Solution**

| Ingredient | Ingredient Solids (% by wt.) | Batch (% by wt.) | Batch Solids (% by wt.) |
|---|---|---|---|
| Gelatin, 250 bloom | 90.00% | 33.33% | 30.00% |
| Hot Water | 0.00% | 66.67% | 0.00% |
| TOTAL | | 100.00% | 30.00% |

The gelatin and water may be combined and heated in a double boiler to a temperature of about 60°C to about 65.6°C (about 140°F to about 150°F) with mixing and then permitted to hydrate for about 30 minutes once the temperature is achieved.

### 2) Preparation of the Citric Acid Solution

The ingredients and their relative amounts, and the method which may be used to prepare the citric acid solution are the same as for the citric acid solution in section I (1) above.

### 3) Preparation of the Color Solution

The ingredients and their relative amounts, and the method which may be used to prepare the color solution are the same as for the color solution in section I (2) above.

### 4) Preparation of the Base Slurry

The ingredients and their relative amounts, and the method which may be used to prepare the base slurry are the same as for the base slurry in section I (3) above.

### 5) Combining the Ingredients For the Aerated Slurry

The cooked base slurry and remaining ingredients may then be combined to obtain the gellable, aerated slurry for deposition. The ingredients and their relative amounts which may be used to obtain the aerated slurry are:

**Aerated Slurry**

| Ingredient | Batch (% by wt.) | Batch Solids (% by wt.) |
|---|---|---|
| Cooked base slurry, 84% by wt. solids | 85.33% | 71.68% |
| Gelatin Solution | 8.38% | 2.51% |
| Cream | 4.00% | 0.72% |
| Strawberry flavor | 0.27% | 0.27% |
| 50% Citric acid solution | 2.00% | 1.00% |
| 10% Red solution | 0.02% | 0.00% |
| TOTAL | 100.00% | 76.18% |

The cooked base slurry may be added to a mixing bowl and whisked at low speed. Live steam may be applied to the exterior of the bowl to prevent the slurry from cooling and setting up.

The gelatin solution, cream, color solution, flavor, and citric acid solution may be sequentially admixed with the cooked base slurry to obtain a substantially homogeneous slurry with a final solids content of about 77% by weight and a temperature of about 90.6°C (about 195°F). The whisk may be increased to a high speed for about 3 to 5 minutes with the live steam still applied to the bowl until the specific gravity of the slurry drops to the 0.6 g/ml to 0.8 g/ml range. The color may be a light pink. The mixer may then be turned off and the whipped contents may be transferred to the first component hopper of the NID Printer Depositor or Mogul for deposition.

The aerated slurry may have a specific gravity of about 0.7 g/ml at about 90.6°C (about 195°F) and about 77% by weight solids.

### III. Depositing the Swirled, Dual Textured Pieces

Using a swirled manifold set-up for the NID depositor or Mogul, swirled, dual textured pieces may be deposited into the cavities of starch trays. The Printer Depositor settings which may be employed to deliver an about 3.76 gm wet weight are:

| Hopper #1: Aerated Slurry | Speeds | Hopper #2: Non-Aerated Slurry |
|---|---|---|
| 68% Stroke | 45% Hopper #1 | 100% Start |
| 10% Suck back | 45% Hopper #2 | 80% Stroke |
| 20 micron up delay | | 10% Suck back |
| Hopper #1 90.6°C (195°F) | | Hopper #2 90.6°C (195°F) |

After depositing the swirled, dual textured pieces into the starch trays, the pieces may be cured for 24 hours. The curing may be in a conditioned environment at 23.9°C (75°F) and 30% relative humidity. The pieces may then be removed from the starch trays by hand and cleaned by using compressed air. The pieces may then be oiled using Certicoat CL 90P (mineral oil/carnauba wax blend) or another food grade release agent at an about 0.15% by weight coating level. The finished product pieces may be packaged in a metallized or foil-lined bag until ready for consumption to prevent the product from drying out over a prolonged period of time.

### EXAMPLE 2

A dual textured swirled fruit snack or gummy product may be produced as in Example 1 except a carrageenan based non-aerated component may be employed instead of the pectin based non-aerated component of Example 1. The ingredients, their relative amounts, and the methods of preparation which may be used to produce the non-aerated component for co-deposition with the aerated component of Example 1 in the Mogul or starch depositor are:

### I. Non-aerated Component or Slurry For Depositing

A gellable liquid non-aerated component for depositing with the Example 1 aerated component may be obtained by preparing a dry blend of carrageenan and a portion of the sugar, and a base slurry, and then combining them with other ingredients to obtain a non-aerated component or slurry:

### 1) Preparation of the Carrageenan-Sugar Dry Blend

The ingredients and their relative amounts which may be used to prepare the carrageenan-sugar mix are:

**Carrageenan-Sugar Mix**

| Ingredient | Batch (% by wt.) |
|---|---|
| Carrageenan (FMC Gelcarin) | 20.33% |
| Sucrose | 80.00% |
| TOTAL | 100.00% |

The carrageenan and sucrose may be dry-blended together to obtain a substantially homogeneous mixture which helps to reduce clumping of the carrageenan upon combining with the wet ingredients.

### 2) Preparation of the Base Slurry

The base slurry for the non-aerated component may be prepared by combining the carrageenan-sugar mix or dry blend with a wet blend containing the remaining sucrose and corn syrup. The ingredients and their relative amounts which may be used to prepare the base slurry are:

**Shell Base Slurry**

| Ingredients | Batch (% by wt.) |
|---|---|
| Carrageenan-Sugar Mix | 9.05% |
| 42 DE Corn Syrup | 45.38% |
| Sucrose | 30.57% |
| Water | 15.00% |
| TOTAL | 100.00% |

The water, 42 DE corn syrup, and sugar may be admixed in a steam jacketed, well agitated vessel such as a Breddo Liquefier to obtain a wet blend. The steam heat may be turned on when the ingredient addition is completed and the heating may be continued to obtain a temperature of about 93.3°C to about 107.2°C (about 200°F to about 225°F). While the slurry is beginning to heat up, a high shear mixer may be turned on and the dry blend carrageenan-sugar mix may be slowly added. When the dry mix addition is complete, mixing may be continued under high shear for about 5 minutes. The high shear mixer may pulsed on occasionally during this period so as to minimize aeration of the batch during cooking. The swept surface agitation may be turned on and heating or cooking may be continued so that the resulting slurry is heated up to around 93.3°C to about 107.2°C (200°F to about 225°F) or as hot as necessary to achieve about 81% solids by weight as measured using a calibrated refractometer.

### 3) Combining All of the Non-aerated Component Ingredients

The cooked base slurry and remaining ingredients may then be combined to obtain the gellable, liquid non-aerated component or slurry for deposition. The ingredients and their relative amounts which may be used to obtain the depositing non-aerated slurry are:

**Depositing Shell Slurry**

| Ingredient | Batch (% by wt.) |
|---|---|
| Cooked base shell slurry | 91.20% |
| 33.3% by wt. Sodium citrate solution | 2.40% |
| 50% by wt. Citric acid solution | 2.00% |
| White grape juice concentrate | 4.00% |
| Flavor | 0.40% |
| TOTAL | 100.00% |

The cooked base slurry, grape juice concentrate, the citric acid solution, the sodium citrate solution, and the flavor may be admixed to obtain a substantially homogeneous finished slurry with a final solids content of about 78% by weight and a temperature of about 93.3°C (about 200°F). The finished slurry may be placed in the non-aerated component hopper of the NID Depositor or Mogul for co-deposition at a temperature of about 93.3°C (about 200°F). The non-aerated component hopper jacket temperature may be set to about 93.3°C (about 200°F), the same temperature of the shell, to help maintain the shell temperature.

## Claims

1. A dual-textured confection comprising a first aerated gelled confection component and a second gelled confection component, in which the ratio of specific gravities of the first confection component to the second confection component is from 0.3:1 to 0.9:1, wherein the first and second confection components are distinct throughout the confection and are present at the surface of the confection and wherein the confection has a swirled or marbled appearance.

2. A dual-textured confection of claim 1, wherein the second confection component is not aerated.

3. A dual-textured confection as claimed in claim 1 or claim 2, wherein the second confection component is transparent or translucent.

4. A dual-textured confection as claimed in any one of the preceding claims, wherein the first and second confection components each comprise at least one gelling agent and a gel-setting agent.

5. A dual-textured confection as claimed in any one of the preceding claims, wherein each of the first and second confection components comprise a cooked base slurry containing at least one sugar, at least one gelling agent, a buffering agent and a gel-setting agent.

6. A dual-textured confection as claimed in claim 4 or claim 5, wherein the gel-setting agent comprises citric acid.

7. A dual-textured confection as claimed in claim 6, wherein the at least one gelling agent comprises at least one of pectin, gelatin, and modified starch.

8. A dual-textured confection as claimed in any one of the preceding claims, wherein the first and or second confection component further comprises a dairy ingredient.

9. A dual-textured confection as claimed in any one of the preceding claims, wherein each of the first confection component and the second confection component further comprise at least one flavouring ingredient and at least one colorant.

10. A dual-textured confection as claimed in any one of the preceding claims, wherein the amount of the first confection component is from about 30% by weight to about 60% by weight based upon the total weight of the first and second confection components.

11. A dual-textured confection as claimed in any one of the preceding claims, wherein the confection has a mousse-like texture and a marbleized appearance.

12. A method for making a dual-textured confection comprising:
(a) providing a first confection component which is aerated;
(b) providing a second confection component such that the ratio of specific gravities of the first confection component to the second confection component is from 0.3:1 to 0.9:1;
(c) swirling the first confection component and the second confection components together to obtain a swirled mass; and
(d) depositing the swirled mass in a mold cavity to shape the swirled mass, wherein each of the first and second confection components are distinct and distributed through the mold cavity and are in direct contact with an inside surface of the mold cavity, such that the first and second confection components are distinct throughout the confection and are present at the surface of the confection.

13. A method as claimed in claim 12, wherein the second confection component is set more rapidly than the first confection component.

14. A method as claimed in claim 12 or claim 13, wherein the first confection component is fed through a plurality of first component apertures into a starch deposition nozzle, and the second confection component is fed through a plurality of second component apertures into the nozzle, the first and second apertures being arranged in alternating positions so that the first and second confection components are swirled together within the nozzle.

15. A method as claimed in any one of claims 12 to 14, wherein the first and second confection components are obtained by admixing water, at least one gelling agent, at least one sugar, and a buffering agent to obtain a substantially homogenous slurry, and cooking the slurry to obtain a cooked base slurry,
and wherein the at least one gelling agent used in the cooked base slurry of the first confection component is pectin and gelatin,
and wherein the at least one gelling agent used in the cooked base slurry of the second confection component is pectin,
and wherein each cooked base slurry further comprises a gel-setting agent comprising citric acid.

## Patentansprüche

1. Zweifach strukturiertes Konfekt, umfassend eine erste, durchlüftete, gelierte Konfektkomponente und eine zweite, gelierte Konfektkomponente, wobei das Verhältnis der spezifischen Dichten der ersten Konfektkomponente zu der zweiten Konfektkomponente 0,3:1 bis 0,9:1 beträgt, wobei die erste und die zweite Konfektkomponente in dem gesamten Konfekt abgegrenzt sind und an der Oberfläche des Konfekts vorhanden sind, und wobei das Konfekt ein gewirbeltes oder marmoriertes Aussehen aufweist.

2. Zweifach strukturiertes Konfekt gemäß Anspruch 1, wobei die zweite Konfektkomponente nicht durchlüftet ist.

3. Zweifach strukturiertes Konfekt gemäß Anspruch 1 oder Anspruch 2, wobei die zweite Konfektkomponente transparent oder durchscheinend ist.

4. Zweifach strukturiertes Konfekt gemäß einem der vorstehenden Ansprüche, wobei die erste und die zweite Konfektkomponente jeweils ein Geliermittel und ein Gelbindemittel umfassen.

5. Zweifach strukturiertes Konfekt gemäß einem der vorstehenden Ansprüche, wobei jede von der ersten und der zweiten Konfektkomponente einen gekochten Grundbrei umfasst, der wenigstens einen Zucker, wenigstens ein Geliermittel, ein Puffermittel und ein Gelbindemittel umfasst.

6. zweifach strukturiertes Konfekt gemäß Anspruch 4 oder Anspruch 5, wobei das Gelbindemittel Citronensäure umfasst.

7. Zweifach strukturiertes Konfekt gemäß Anspruch 6, wobei das wenigstens eine Geliermittel wenigstens eines von Pectin, Gelatine und modifizierter Stärke umfasst.

8. Zweifach strukturiertes Konfekt gemäß einem der vorstehenden Ansprüche, wobei die erste und/oder die zweite Konfektkomponente ferner einen Milchprodukt-Inhaltsstoff umfasst.

9. Zweifach strukturiertes Konfekt gemäß einem der vorstehenden Ansprüche, wobei jede von der ersten Konfektkomponente und der zweiten Konfektkomponente ferner wenigstens einen Aroma-Inhaltsstoff und wenigstens einen Farbstoff umfasst.

10. Zweifach strukturiertes Konfekt gemäß einem der vorstehenden Ansprüche, wobei die Menge der ersten Konfektkomponente von etwa 30 Gew.-% bis etwa 60 Gew.-% bezogen auf das Gesamtgewicht der ersten und der zweiten Konfektkomponente beträgt.

11. Zweifach strukturiertes Konfekt gemäß einem der vorstehenden Ansprüche, wobei das Konfekt eine Mousse-artige Struktur und ein marmoriertes Aussehen aufweist.

12. Verfahren zum Herstellen eines zweifach strukturierten Konfekts, umfassend:
(a) Bereitstellen einer ersten Konfektkomponente, die durchlüftet ist;
(b) Bereitstellen einer zweiten Konfektkomponente, so dass das Verhältnis der spezifischen Dichten der ersten Konfektkomponente zu der zweiten Konfektkomponente 0,3:1 bis 0,9:1 beträgt;
(c) Zusammenwirbeln der ersten Konfektkomponente und der zweiten Konfektkomponente, um eine gewirbelte Masse zu erhalten; und
(d) Absetzen der gewirbelten Masse in dem Hohlraum eines Formwerkzeugs, um die gewirbelte Masse zu formen, wobei jede von der ersten und der zweiten Konfektkomponente abgegrenzt und in dem Hohlraum des Formwerkzeugs verteilt ist und in direktem Kontakt mit einer Innenoberfläche des Hohlraums des Formwerkzeugs steht, so dass die erste und die zweite Konfektkomponente in dem gesamten Konfekt abgegrenzt und an der Oberfläche des Konfekts vorhanden sind.

13. Verfahren gemäß Anspruch 12, wobei die zweite Konfektkomponente schneller als die erste Konfektkomponente abgebunden wird.

14. Verfahren gemäß Anspruch 12 oder Anspruch 13, wobei die erste Konfektkomponente durch eine Vielzahl von Aperturen für die erste Komponente einer Stärkeabsetzdüse zugeführt wird und die zweite Konfektkomponente durch eine Vielzahl von Aperturen für die zweite Komponente der Düse zugeführt wird, wobei die ersten und die zweiten Aperturen in abwechselnden Positionen angeordnet sind, so dass die erste und die zweite Konfektkomponente innerhalb der Düse zusammengewirbelt werden.

15. Verfahren gemäß einem der Ansprüche 12 bis 14, wobei die erste und die zweite Konfektkomponente durch Mischen von Wasser, wenigstens einem Geliermittel, wenigstens einem Zucker und Puffermittel, um einen im Wesentlichen homogenen Brei zu erhalten, und Kochen des Breis, um einen gekochten Grundbrei zu erhalten, erhalten sind,
und wobei das wenigstens eine Geliermittel, das in dem gekochten Grundbrei der ersten Konfektkomponente verwendet wird, Pectin und Gelatine ist,
und wobei das wenigstens eine Geliermittel, das in dem gekochten Grundbrei der zweiten Konfektkomponente verwendet wird, Pectin ist,
und wobei jeder gekochte Grundbrei ferner ein Gelbindemittel, umfassend Citronensäure, umfasst.

## Revendications

1. Friandise à double texture comprenant un premier composant de la friandise gélifié aéré et un deuxième composant de la friandise gélifié, dans laquelle le rapport entre les poids spécifiques du premier composant de la friandise et du deuxième composant de la friandise est de 0,3:1 à 0,9:1, les premier et deuxième composants de la friandise étant distincts dans l'ensemble de la friandise et étant présents à la surface de la friandise et la friandise ayant un aspect spiralé ou marbré.

2. Friandise à double texture selon la revendication 1, **caractérisée en ce que** le deuxième composant de la friandise n'est pas aéré.

3. Friandise à double texture selon la revendication 1 ou la revendication 2, **caractérisée en ce que** le deuxième composant de la friandise est transparent ou translucide.

4. Friandise à double texture selon l'une quelconque des revendications précédentes, **caractérisée en ce que** les premier et deuxième composants de la friandise comprennent chacun au moins un agent gélifiant et un agent de solidification de gel.

5. Friandise à double texture selon l'une quelconque des revendications précédentes, **caractérisée en ce que** chacun des premier et deuxième composants de la friandise comprend une bouillie de base cuite contenant au moins un sucre, au moins un agent gélifiant, un agent tampon et un agent de solidification de gel.

6. Friandise à double texture selon la revendication 4 ou la revendication 5, **caractérisée en ce que** l'agent de solidification de gel comprend l'acide citrique.

7. Friandise à double texture selon la revendication 6, **caractérisée en ce que** ledit au moins un agent gélifiant comprend au moins un agent parmi une pectine, une gélatine et un amidon modifié.

8. Friandise à double texture selon l'une quelconque des revendications précédentes, **caractérisée en ce que** le premier et/ou deuxième composant de la friandise comprend en outre un ingrédient laitier.

9. Friandise à double texture selon l'une quelconque des revendications précédentes, **caractérisée en ce que** chacun parmi le premier composant de la friandise et le deuxième composant de la friandise comprend en outre au moins un ingrédient aromatisant et au moins un colorant.

10. Friandise à double texture selon l'une quelconque des revendications précédentes, **caractérisée en ce que** la quantité du premier composant de la friandise est d'environ 30 % en poids à environ 60 % en poids sur la base du poids total des premier et deuxième composants de la friandise.

11. Friandise à double texture selon l'une quelconque des revendications précédentes, **caractérisée en ce que** la friandise a une texture de type mousse et un aspect marbré.

12. Méthode de fabrication d'une friandise à double texture comprenant :
(a) l'obtention d'un premier composant de la friandise qui est aéré ;
(b) l'obtention d'un deuxième composant de la friandise de sorte que le rapport entre les poids spécifiques du premier composant de la friandise et du deuxième composant de la friandise est de 0,3:1 à 0,9:1 ;
(c) le mélange par mouvement de rotation du premier composant de la friandise et du deuxième composant de la friandise pour obtenir une masse mélangée par mouvement de rotation ; et
(d) le dépôt de la masse mélangée par mouvement de rotation dans une cavité d'un moule pour former la masse obtenue par mouvement de rotation, chacun parmi les premier et deuxième composants de la friandise étant distinct et distribué dans toute la cavité du moule et étant en contact direct avec la surface interne de la cavité du moule, de sorte que les premier et deuxième composants de la friandise soient distincts dans l'ensemble de la friandise et soient présents à la surface de la friandise.

13. Méthode selon la revendication 12, **caractérisée en ce que** le deuxième composant de la friandise se solidifie plus rapidement que le premier composant de la friandise.

14. Méthode selon la revendication 12 ou la revendication 13, **caractérisée en ce que** le premier composant de la friandise est introduit par une pluralité de premières ouvertures de composant dans une buse de dépôt d'amidon, et le deuxième composant de la friandise est introduit par une pluralité de deuxièmes ouvertures de composant dans la buse, les premières et deuxièmes ouvertures étant arrangées en position alternées de sorte que les premier et deuxième composants de la friandise soient mélangés ensemble par mouvement de rotation au sein de la buse.

15. Méthode selon l'une quelconque des revendications 12 à 14, **caractérisée en ce que** les premier et deuxième composants de la friandise sont obtenus en mélangeant de l'eau, au moins un agent gélifiant, au moins un sucre, et un agent tampon pour obtenir une bouillie sensiblement homogène, et en faisant cuire la bouillie pour obtenir une bouillie de base cuite,
et **en ce que** ledit au moins un agent gélifiant utilisé dans la bouillie de base cuite du premier composant de la friandise est la pectine et la gélatine,
et **en ce que** ledit au moins un agent gélifiant utilisé dans la bouillie de base cuite du deuxième composant de la friandise est la pectine,
et **en ce que** chaque bouillie de base cuite comprend en outre un agent de solidification de gel comprenant l'acide citrique.
